# EUROPEAN PATENT APPLICATION

(11) **EP 4 835 797 A1**
(43) Date of publication of application: **04.11.2026**
(21) Application number: 26171672.4
(22) Date of filing: 10.04.2026
(51) Int. Cl.: G06Q 30/0601

(54) **ITEM DISCOVERY ENGINE IN AN ITEM LISTING SYSTEM**

(30) Priority: 16.04.2025 US 202563789920 P; 08.07.2025 US 202519263355
(71) Applicant: eBay Inc., San Jose, CA 95125 (US)
(72) Inventor: JENQ, Janet J., San Jose, 95125 (US); MORALES, Miraida, San Jose, 95125 (US); HUGHES, Jason Robert, San Jose, 95125 (US)
(74) Representative: Müller-Boré & Partner Patentanwälte PartG mbB

(57) **Abstract**

Methods, systems, and computer storage media for providing an item discovery engine in an item listing system are described. The item discovery engine is designed to enable users to identify, understand, and assess the value of physical objects in real-time-without structured input. The item discovery engine seamlessly blends on-device object detection, generative AI interpretation, multi-layered price estimation, and a non-blocking, exploratory user interface into a lightweight, discovery-driven experience. In operation, an item discovery engine interface associated with an image is generated. The item discovery engine operates based on a multimodal fallback-driven architecture for real-time discovery of items. A selection of an item associated with the image is received. The item is communicated to cause identification for an item discovery card for the item. The information for the item discovery card is received in response to communicating the item. Generation of the item discovery card with the information is caused.

## Description

### BACKGROUND

Users can interact with item listing systems that support storing items in item databases and providing a search system for receiving queries and identifying search result items based on the queries. The item listing system provides a seamless user experience when browsing through a variety of products. The item listing system allows users to search and discover products through a detailed and organized catalog, enhancing the browsing process. The item listing system may also incorporate features that support item listing, such as dynamic item categorization, real-time inventory updates, and customizable filtering options. The item listing system supports pricing functionality by allowing sellers to set and update the price for each product in the item listing system. It enables price adjustments based on various factors such as promotions, discounts, or market conditions.

### SUMMARY

Various aspects of the technology described herein are generally directed to systems, methods, and computer storage media for, among other things, providing an item discovery management using an item listing engine in item listing system. Item discovery management refers to the item listing engine's orchestration of processes and components that govern the detection, interpretation, valuation, and user interaction with items identified through images. The item discovery engine is designed to enable users to identify, understand, and assess the value of physical objects in real time-without requiring prior knowledge, structured input, or intent to sell. The item discovery engine seamlessly blends on-device object detection, generative AI interpretation, multi-layered price estimation, and a non-blocking, exploratory user interface into a lightweight, discovery-driven experience.

At its core, the item discovery engine captures an image of an item through a mobile interface and runs a waterfall-style recognition pipeline. If a direct product match is found, it proceeds with classification and pricing. If not, it falls back to a generative Artificial Intelligence (AI) model that creates a descriptive title and infers category metadata from the image. This adaptive flow ensures that users receive progressive levels of insight regardless of how rare or unstructured the item is.

Once item metadata is assembled, the item discovery engine estimates market value using a tiered pricing strategy, which incorporates recent sales, historical transaction data, and marketplace analytics. Instead of requiring perfect item matches, it surfaces price ranges and contextual signals-such as listing trends and price positioning-empowering users to make informed decisions quickly.

The item listing discovery engines specifically provides support for ambiguity and lightweight interaction. Users are forced to complete listings or commit to actions; instead, the item listing discovery encourages exploration by surfacing value where users may not have seen it before. Its non-blocking UI allows multiple items to be scanned in quick succession, with asynchronous result cards that load as data becomes available. And rather than duplicating full listing or buying tools, the item listing engine links an existing item listing infrastructure, acting as a front-end "intent expander" rather than a standalone transaction system. In this way, the item listing engine reimagines how people interact with their physical possessions-not as static inventory, but as potential opportunities-delivered through a smart, flexible, and user-centered interface.

In operation, an item discovery engine interface associated with an image is generated. The item discovery engine operates based on a multimodal fallback-driven architecture for real-time discovery of items. A selection of an item associated with the image is received. The item is communicated to cause identification for an item discovery card for the item. The information for the item discovery card is received in response to communicating the item. Generation of the item discovery card with the information is caused.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIGS. 1A - 1E are schematics associated with providing item discovery management in an item listing system, in accordance with aspects of the technology described herein;
FIG. 2A is a block diagram associated with providing item discovery management in an item listing system, in accordance with aspects of the technology described herein;
FIG. 2B is a flow diagram associated with providing item discovery management, in accordance with aspects of the technology described herein;
FIG. 3 provides a first exemplary method of providing item discovery management in an item listing system, in accordance with aspects of the technology described herein;
FIG. 4 provides a second exemplary method of providing item discovery management in an item listing system, in accordance with aspects of the technology described herein;
FIG. 5 provides a third exemplary method of providing item discovery management in an item listing system, in accordance with aspects of the technology described herein;
FIG. 6 provides a block diagram of an exemplary item listing system computing environment suitable for use in implementing aspects of the technology described herein;
FIG. 7 provides a block diagram of an exemplary distributed computing environment suitable for use in implementing aspects of the technology described herein; and
FIG. 8 is a block diagram of an exemplary computing environment suitable for use in implementing aspects of the technology described herein.

### DETAILED DESCRIPTION

### OVERVIEW

An item listing system and platform supports storing items (products or assets) in item databases and provides a search system for receiving queries and identifying search result items based on the queries. An item (e.g., physical item or digital item) refers to a product or asset that is provided for listing on an item listing platform. Search systems support identifying, for received queries, result items from item databases. Item databases can specifically be for content platform or item listing platforms such as EBAY content platform, developed by EBAY INC., of San Jose, California.

An item listing system may also provide generative-AI-supported applications ("generative AI applications") that leverage generative AI models (e.g., Large Language Models - "LLM") to create, generate, or produce content, data or outputs. LLMs are a specific class of generative AI models that are primarily focused on generating human-like text. Generative AI models, like GPT (Generative-Pre-trained Transformer) and its variants, are designed to generate human-like text or other types of data based on the input they receive (e.g., via a prompt interface). These applications use generative AI to perform various task across different domains to provide improvement in automation, efficiency, and human-like interaction.

Conventional item listing systems are not configured with comprehensive computing logic and infrastructure to effectively and efficiently to identify, understand, and assess the value of physical objects in real time-without requiring prior knowledge, structured input, or intent to sell. This limitation arises because traditional item listing systems require structured input, assume clear user intent, and rely on rigid, sequential workflows that hinder casual exploration and fast, multi-item engagement. Traditional listing and valuation systems create barriers for casual users by assuming prior knowledge, intent, and structured input.

By way of illustration, traditional platforms present high friction at the start of the listing process. They expect users to already know what they have and intend to sell, requiring manual searches, category selection, title formatting, condition tagging, and price estimation. This process is slow, rigid, and often overwhelming for first-time or casual sellers. These systems struggle with unstructured or ambiguous items, like handmade goods, vintage collectibles, or oneof-a-kind pieces that fall outside standard catalogs. These systems typically fail when there's no direct match, leaving users stuck.

In addition, existing tools ignore the gray space between curiosity and intent. Users often just want to know what something is worth before deciding whether to sell it. Legacy systems are built for active buyers and sellers, not the discovery phase. Moreover, linear, blocking workflows that force users into step-by-step processes and delay feedback.

By way of example, consider a person cleaning out their garage who stumbles upon a box of miscellaneous old electronics-an old digital camera, a bundle of charging cables, and a vintage MP3 player. They are not sure what anything is worth, and the process of listing even one item feels overwhelming. They would need to search each product manually, guess the right keywords, choose the right category, write a title, specify a condition, and somehow come up with a competitive price-steps that often involve jumping between multiple screens and tools. Faced with this friction, many users simply give up.

In another scenario, someone browsing a local thrift store sees a ceramic figure with no brand markings or labels. Intrigued, they want to know if it's valuable, but when they try to search for it using traditional product listing systems, they find no exact match. The system requires a product name, UPC, or brand, which they don't have. Because it doesn't recognize the item or offer suggestions, the process stalls entirely.

Even in cases where people aren't trying to sell, interest often begins with curiosity. A person might find an old toy in their attic or come across a collectible at a flea market and wonder, "What's this worth?" But unless they're ready to start a formal listing or have specific details to search with, current tools offer no lightweight way to simply explore that question.

Additionally, when users do want to evaluate multiple items at once-say during a spring-cleaning weekend-they run into rigid, one-at-a-time workflows. Each item must be evaluated and listed in full before starting the next. There's no way to quickly capture and queue several items, no support for multi-item flow, and no flexibility to come back later without losing progress.

As a result, traditional systems are not built for the casual, curious, or exploratory user-they are built for someone who already knows exactly what they have, what it's worth, and that they want to sell it now. As such, a more comprehensive item discovery engine - with an alternative basis for providing item discovery management functionality- can improve computing operations and interfaces for item listing systems.

### DESCRIPTION OF TECHNICAL SOLUTION

At a high level, item discovery engine is designed to provide object recognition and marketplace engagement, to bridge the gap between casual curiosity and transactional intent. Traditional listing tools assume that a user already knows what they have and wants to sell it. In contrast, the item discovery engine embraces uncertainty, allowing users to simply point their phone at an object and receive meaningful insights-what it is, what it might be worth, and what they could do next.

Built as a lightweight tool, the item discovery engine integrates on-device object detection, server-side artificial intelligence (AI) interpretation, and dynamic market analytics into a seamless, responsive experience. The item discovery engine is uniquely structured to support exploration, enabling users to scan multiple items in sequence without interruption, receive contextual price insights, and take action-whether that means listing an item, researching further, or simply learning something new. The item discovery engine operates based on a technical architecture, that supports its adaptive, hybrid approach to object recognition, valuation, and user experience-executed through a series of modular yet seamlessly connected components.

Operationally, the item discovery engine receives an image input associated with on-device and server-side hybrid process. In one embodiment, using on-device detection, offlinecapable recognition of objects can be performed. This reduces friction and latency-unlike traditional approaches that require uploading before any feedback. Most systems either rely entirely on local recognition or server-based AI, but this hybrid execution model maximizes responsiveness without compromising depth of analysis.

The item discovery engine uses price estimation that is layered with market analytics. In this way, rather than pulling static comparison, the item discovery engine analyzes recent and historical transaction data, enhanced with pricing strategy signals (e.g., optimal listing range, sell-through patterns). The combination of keyword and exact match techniques across multiple services is more robust than single-method valuation tools.

The item discovery engine also supports a non-blocking asynchronous user interface (UI) flow. The frontend architecture is optimized for continuous, multi-item scanning. Users can scan multiple objects, and results appear asynchronously in swipeable cards-no waiting, no blocking. Traditional tools often require sequential flow, but this interface supports "browse and discover" interaction at scale.

The item discovery engine architecture provides for seamless hand-offs to existing ecosystem of the item listing system infrastructure. Rather than duplicating existing listing or buying workflows, the item discovery engine links directly into item listing system services once the user expresses interest. This preserves the lightweight, discovery-first nature of the item discovery engine while allowing deeper action when desired.

Moreover, whereas most systems attempt to resolve ambiguity or throw errors when uncertain, the item listing engine manages unknowns as moments for engagement. If the item listing engine cannot identify an item, it encourages the user to search manually with assisted data (title, cropped image). This management of the gray is both a UX and functional innovation.

By way of example, Carla visits a local flea market and comes across a small, unmarked metal figurine. She's unsure of its value and opens a mobile app with the item discovery engine designed to assess items through image-based input. As the camera view loads, the on-device object detection engine identifies and outlines the figurine in real time. The detection happens locally, providing immediate visual feedback. Carla taps the outlined object to confirm selection, triggering an image crop and background upload to the server.

Once uploaded, the backend begins a waterfall item identification and a waterfall price determination process. It first attempts to match the image to a known item in the catalog (e.g., item identification Application Programming Interface - API). When no match is found, the item discovery engine escalates to an AI recommendation by Image engine or an AI model (e.g. a multimodal model or generative AI model). For example, a generative AI model analyzes the image and outputs a descriptive title: "Vintage cast iron animal figurine," along with a suggested category and a default condition of "used." This metadata is then passed to the pricing pipeline.

The waterfall price determination includes a price range identification engine that queries multiple services (e.g., a price guidance engine and an e-commerce analytics engine). For example, the price range identification engine starts with a price guidance system that uses keyword-based matching over recent item listing system transactions. If the result set is insufficient, it escalates to historical sales data and active listings using broader search parameters. The output is a price range of $45 to $65, along with context from the e-commerce analytics engine-such as optimal listing ranges and pricing trends-based on comparable items.

Meanwhile, Carla continues scanning other items. The UI is asynchronous and non-blocking, allowing her to capture new objects without waiting for previous results. Each item is rendered as a card in the interface, loading data independently. She can swipe between cards, tap to view item details, or remove any card from the session. If she wants to proceed, she can initiate a listing workflow with pre-populated metadata or open a search interface for additional comparison. If the item discovery engine cannot identify an item, it returns a generated title and prompts the user to refine or search manually. The entire experience is optimized for speed, minimal input, and iterative exploration-supporting both high-volume users and casual, curiosity-driven scenarios.

### EXAMPLE SYSTEM AND RESOURCES

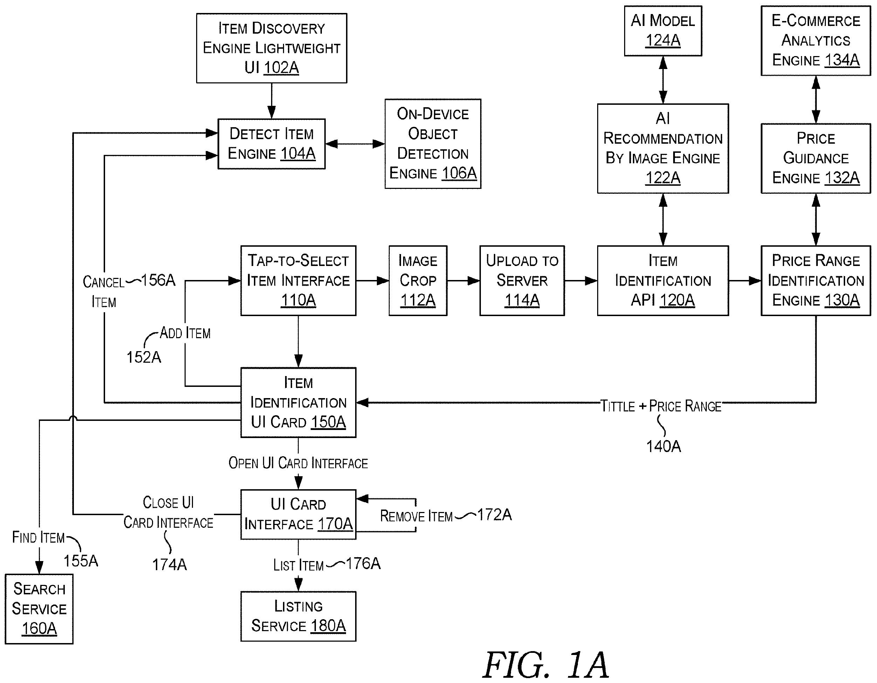

Aspects of the technical solution can be described by way of examples and with reference to FIGS. 1A - 1E. FIGS. 1A - 1E are schematic illustrations of different features and functionality associated with the item discovery engine to provide item discovery management in an item listing system.

With reference to FIG. 1A, FIG. 1A is a flow diagram of an item discovery engine workflow associated with a modular, image-driven item discovery engine that designed to identify, classify, and estimate the value of real-world objects using a combination of on-device processing, server-side AI services, and lightweight user interfaces.

The process begins with the item discovery lightweight User Interface (UI) 102A, which allows users to either capture a live image via their device's camera or upload an existing image. This image is passed to the detect item engine 104A which may leverage the on-device object detection engine 106A to identify and localize objects within the image. This detection is handled in real time and on-device, which enables low-latency feedback and preserves responsiveness in the user interface.

Once objects are detected, the user engages the tap-to-select item interface 110A to confirm which object should be analyzed. This is useful in scenarios where multiple objects are detected in a single frame. Upon selection, the object is passed through the image crop 112A operation, which isolates the item visually to ensure that only relevant image content is processed. The cropped image is then sent through the upload to server 114A operation, initiating server-side analysis.

Once on the server, the image is processed using an item identification API 120A, which may generate complete metadata record, including title, category ID, and a default item condition-typically "used"-unless condition detection services to make a determination of an inferred condition of the item. As a fallback to the item identification API 120A, an AI recommendation by image engine 122A operation and/or an AI model 124A to evaluate the item. If the AI recommendation by image engine 122A does not identify the item, the AI model 124A analyzes the image to produce a descriptive natural-language title and a potential category for the object.

If the item identification API is successful, the metadata record is then sent to the price range identification engine 130A. The price range identification engine 130A coordinates downstream calls to pricing services, starting with the price guidance engine 132A which estimates item value based on keyword-matched results from item listing system transaction data. The item discovery engine may be further extended to include historical data sources or may fall back to active and sold listing data via the search service 160A if initial pricing attempts fail. Concurrently, the e-commerce analytics engine 134A augments the pricing output with additional market intelligence, including sell-through rates, price variance, and other e-commerce signals.

The resulting metadata, including title and price range, is returned (Title + Price Range140A) to the front-end and displayed through the item identification UI card 150A. A user can use the add item 152A function can be used to add a card to an item store (or item bank) via a UI card interface 170A. If the user instead wants to search for similar listings, they can trigger the find item 155A function to retrieve comparable sold or active listings using the same metadata from search service 160A. These cards are visually rendered components in the UI card interface 170A and are designed to load asynchronously and slide into view as each analysis completes. Users use the open UI card interface, scroll through scanned items, remove item 172A, and close UI card interface 174A functions to manage which items are retained for further action.

Once the user decides to list an item, the list item 176A function passes the prepared metadata to the listing service 180A, where a draft listing is automatically populated. This item discovery engine design encourages exploration and supports both selling and buying workflows, all while minimizing user friction. The UI is non-blocking, meaning users can continue capturing and processing new items while prior analyses complete. This layered architecture-combining on-device speed, generative AI enrichment, multi-source pricing, and flexible UI-makes the item discovery engine a powerful, intuitive tool for casual users and power sellers alike.

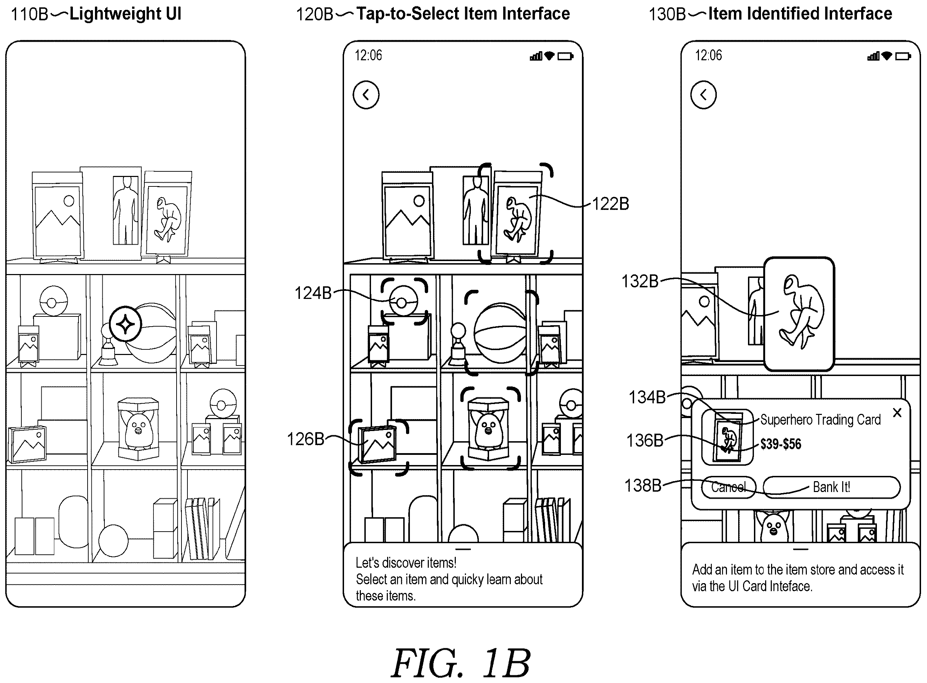

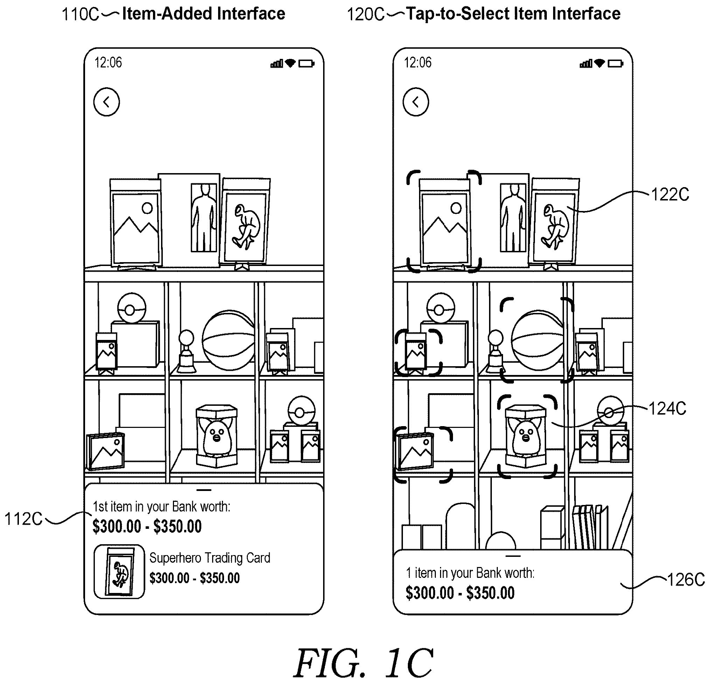

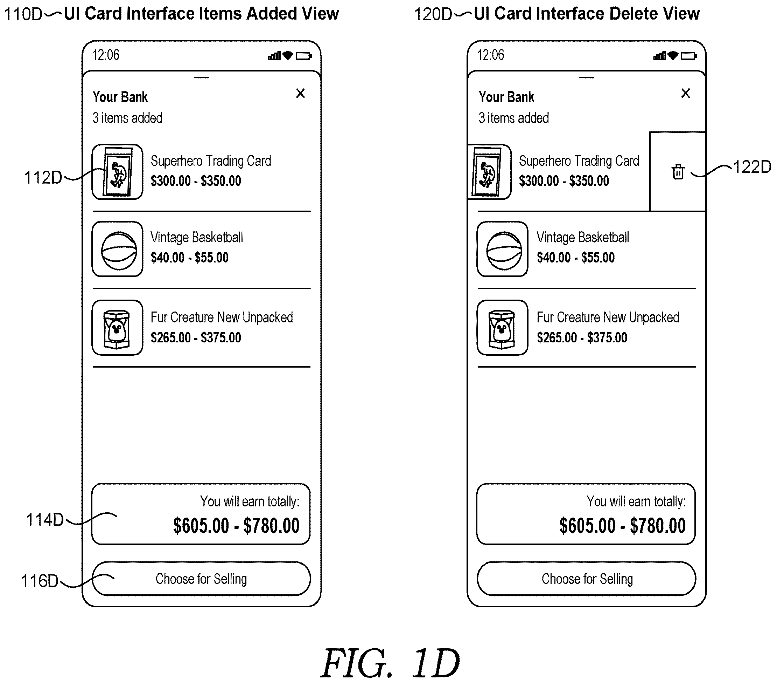

With reference to FIG. 1B, 1C, and 1D, FIG. 1B, 1C, 1D collectively illustrate the user interface and interaction flow of the item discovery engine from initial detection to item identification and multi-item management. They represent sequential states in the item discovery engine's lightweight, asynchronous UI-starting with real-time object detection and tap-to-select interaction (FIG. 1B), followed by the display of identified item data and price estimates (FIG. 1C), and concluding with the user's personalized item store view where items can be reviewed, totaled, or removed (FIG. 1D). Collectively, they demonstrate how the item discovery engine supports fast, exploratory engagement with multiple items using adaptive detection, dynamic pricing, and responsive session-based controls. In this way, the front-end implementation of the item discovery engine provides interfaces that support users' progress from visual item detection to identification, valuation, and inventory management.

In FIG. 1B, the experience begins with a lightweight UI 110B that displays a live or static visual grid of items, such as collectibles arranged on a shelf. Item discovery engine employs on-device object detection to scan the visual field in real time and highlight candidate objects for selection. This detection can be performed locally to reduce latency and enable rapid interaction. When an object is recognized, a bounding box appears over it, prompting the user to tap and begin the identification process.

Once an item is tapped, the interface transitions to the tap-to-select item interface 120B, where all detected objects are shown with bounding boxes (122B, 124B, and 126B). The user can select from any of the identified items, and the selection triggers a background upload of the cropped image region to the backend. If a product match is available, the server returns structured data including a title and item ID. If no match is found, the item discovery engine uses a generative model to produce a descriptive title and category. The product may be assigned a default condition. An item identified interface 130B can be generated containing the image 132B associated with some frame or content isolation effect, item title 134B, item price 136B, and item card interface functionality 138B - for example, to either cancel or add the item, to item store or "bank".

Turning to FIG. 1C, after an item is added, an item-added interface 110C is provided and the user sees a confirmation pop-up 112C containing the item name and a dynamically generated price range. This appears in the context of the item store or "bank," confirming that the item is now stored in the current session. In the tap-to-select item interface 120C, the item discovery engine disables re-selection of previously added items 122C while keeping other items available (124C) for selection, maintaining a non-blocking, asynchronous flow. A pop-up 126C identifying a total number of items and total price range of the current session may remain displayed on the tap-to-select item interface 120C.

Turning to FIG. 1D, the item discovery engine supports the management of identified items through the UI card interface (e.g., UI card interface - items added view 110D and UI card interface - delete view 120D). Each card shows the item title and its estimated value range (e.g., spiderman trading card 112D), and a running total 114D is calculated at the bottom of the view, reflecting the cumulative estimated value of all discovered items. A primary call-to-action 116D button is available to initiate downstream workflows, such as listing items for sale. The user can also remove items individually through a delete icon (122D), allowing them to manage their inventory before proceeding. All interactions are designed to be asynchronous, allowing users to scan, select, and manage items in parallel without interrupting the flow of discovery. This architecture supports high-throughput, multi-item valuation and reflects the core principles of the item discovery engine-exploration-first interaction, adaptive intelligence, and minimal user effort.

It is contemplated that the item discovery engine can provide an interface state in which when it is unable to identify or value an item due to insufficient data, lack of matches, or the item being highly unique or uncommon. Rather than returning an error or halting the user flow, this no information found interface is designed to handle ambiguity and support alternate paths for discovery.

In this state, after the user taps to select an item, the item discovery engine displays a card similar in style to those used for identified items, but with modified messaging. The card features the item image with a neutral or exploratory header-such as "We couldn't identify this item (yet)" or "Looks unique!"-and an invitation to continue exploring. Instead of providing a title, category, or price range, the card includes suggested next actions. These may include a "Search Manually" button that pre-fills a generated title or category guess into a standard item listing discovery search field, a "Describe This Item" prompt where the user can enter keywords, or an "Add Notes" field to save the item for later review.

The card may also contain subtle visual cues that affirm the user's effort was valuable, even without an item discovery engine result-such as a badge reading "Uncommon Find". These design choices maintain engagement, reinforce the exploratory nature of the tool, and encourage continued use even in the absence of concrete output.

To support future identification, the item can still be added to the user's "bank" or session inventory, tagged as "pending identification." This ensures that the user doesn't lose their progress and can revisit the item later. If the item discovery engine receives more data over time or the user provides additional input, the item can be reprocessed. The item discovery engine supports the ability to "celebrate the gray" -offering a fallback, encouraging user contribution, and preserving momentum even when automation reaches its limits.

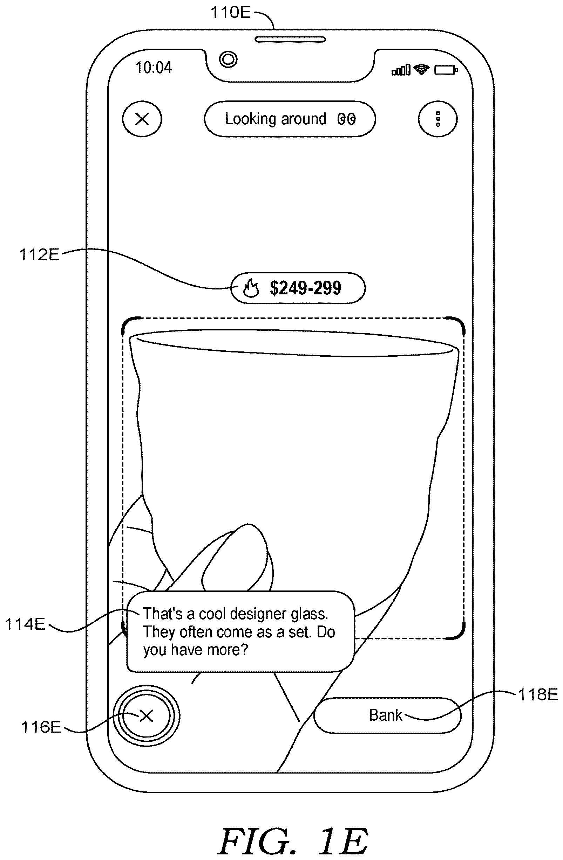

With reference to FIG. 1E, FIG. 1E illustrates an alternative interaction state within the item discovery engine, where a scanned object-here, a unique red glass-is visually detected but lacks a clear, structured product match. The interface reflects the item discovery engine's ability to gracefully handle ambiguity by shifting from exact identification to exploratory guidance and multimodal interaction. The item listing engine continues to engage the user by blending contextual messaging, intelligent suggestions, and supplemental features designed to support alternative paths of discovery and engagement.

At the top of the interface, 110E represents the real-time camera-based lightweight UI in "Looking around" mode, indicating that the item discovery engine is actively scanning the environment. This reflects the item listing engine's continuous discovery loop powered by the on-device object detection engine. 112E soft price estimation range ($249-$299) overlay is generated through the item listing engine's dynamic valuation pipeline, even though the item may not have a high-confidence product match. This price output could result from either historical comparables or visual similarity models, showing that the item discovery engine can still surface meaningful insights in ambiguous scenarios.

Below the object, 114E features a context-aware, AI-generated caption: "That's a cool lenschdorf glass. They often come as a set. Do you have more?" This is an example of the item discovery engine's knowledge-based usability enhancement, which supplements incomplete identifications with educational or value-building information. The item listing engine's uses domain knowledge to prompt users for related items (e.g., a set) and guides them toward broader value recognition. It turns ambiguity into opportunity, sustaining user engagement even in uncertain conditions.

To the bottom-left, 116E is a cancel button, giving users immediate manual control, while 118E is a "Bank" button allowing users to save the item into their personal inventory despite the system's uncertainty. This reflects the batch listing and item store architecture, enabling the user to accumulate potentially valuable objects for future processing, even if confidence is low in the current session. Saving the item enables later listing, further refinement, or manual input, supporting user-led exploration.

This entire interface is dynamically generated based on the scanned object and the user's behavior, highlighting the item listing engine's dynamic UI framework. A professional seller might see options to research similar listings or compare price data, while a casual user might be nudged to "Scan more like this." If voice capabilities are enabled, this screen could respond to a command such as "Add to bank" or "Show similar items," powered by the voice control flow, which enhances accessibility for hands-free use.

Finally, the underlying design supports integration with augmented reality (AR) extensions. Though not visible in this frame, the object could later be placed in a virtual home scene using AR for contextual visualization, especially for decor or furniture items. Combined with user feedback research strategies, screens like FIG. 1E are tested and refined to balance flexibility, education, and delight-even when the system's confidence is low. Rather than treating unknowns as failure points, the interface repositions them as starting points for curiosity and deeper engagement.

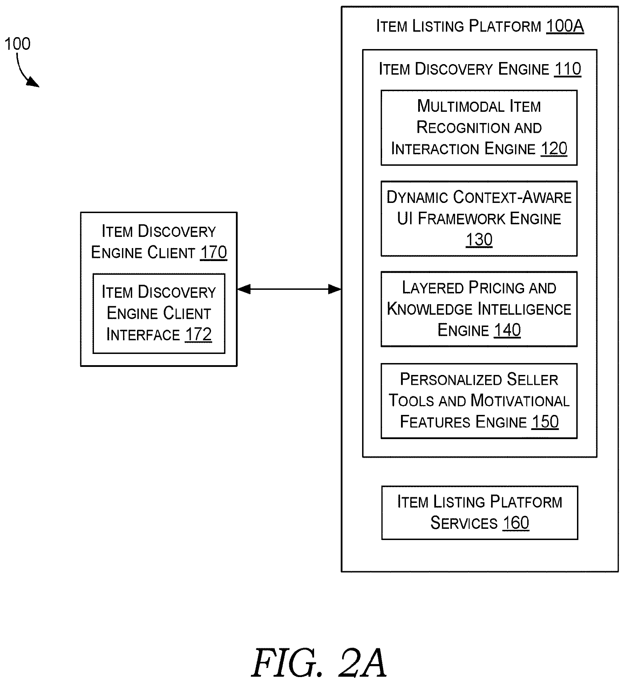

With reference to FIG. 2A, FIG. 2A a cloud computing system 100 (e.g., item listing system), item listing platform 100A, item discovery engine 110, multimodal item recognition and interaction engine 120, dynamic context-aware UI framework engine 130, layered pricing and knowledge intelligence engine 140, personalized seller tools and motivational features engine 150, and item listing platform services; item discovery engine client 170 and item discovery engine client interface 172.

The cloud computing system 100 serves as the foundational infrastructure that offers scalable and flexible resources to host and manage all system components. The item listing platform 100A supports major functional components interoperate through a client-server model. The item discovery engine 110 is the core module embedded in the item listing platform 100A and provides sub-engines that work in sequence or parallel to support seamless, intelligent, and personalized item discovery and listing.

Item discovery engine 110 operates as part of a broader item listing platform 100A, illustrating the modular composition of the system and its interaction with the client-side application. The architecture separates client-side responsibilities from server-side intelligence while ensuring tight integration through a defined communication interface.

The item discovery engine client 170 represents the user-facing application, which may be a mobile app, web-based interface, or embedded software component in a smart device. This client captures user input-such as camera feeds, touch interactions, or voice commandsand transmits relevant data through the item discovery engine client interface 172, a bidirectional API layer. The item discovery engine client interface 172 supports structured data exchange, including image payloads, session metadata, user profile context, and command instructions, and receives results such as item recognition outputs, valuation data, UI state updates, and listing options.

On the platform side, the item listing platform 100A provides the item discovery engine 110, a composite system made up of four functional engines, each responsible for a critical phase of the discovery-to-listing pipeline.

The multimodal item recognition and interaction engine 120 is responsible for ingesting and interpreting item-related input from the client. It performs on-device object detection, followed by server-side AI inference. The multimodal item recognition and interaction engine 120 implements a fallback-driven recognition pipeline associated with a waterfall logic: it first attempts to match items to known product entities in structured catalogs; if unsuccessful, it invokes an AI recommendation by image engine and AI model (e.g., a generative AI model produces descriptive titles, infer categories, and apply default condition metadata). It also accepts voice input mapped to structured commands and supports session-aware transitions across interaction modes. The multimodal item recognition and interaction engine 120 maintains low-latency performance through local pre-processing and asynchronous server-side requests.

The dynamic context-aware UI framework engine 130 drives the logic for personalized interface rendering. The dynamic context-aware UI framework engine 130 dynamically assembles UI components based on the user's behavioral profile, item attributes, and engagement history. This includes switching between minimal interaction flows for new users and advanced tools for experienced sellers. It supports multi-item session views, interactive UI cards, real-time hints, and feature toggling based on system confidence levels or detected user intent. It ensures that the user interface is not static but instead adapts to match task complexity and user expectations in real time.

The layered pricing and knowledge intelligence engine 140 implements a hierarchical valuation strategy. It performs cascading queries across multiple pricing sourcesbeginning with keyword-based guidance, followed by structured historical data and finally fallback search-based estimation using active/sold listings. The layered pricing and knowledge intelligence engine 140 normalizes these results into a price range and overlays contextual information, such as pricing trends, average sell-through rates, and related listings. Additionally, it manages knowledge-based enhancements, offering tooltips, guided education (e.g., how to take better photos), and comparison data to improve user understanding and trust in the system's output.

The personalized seller tools and motivational features engine 150 is responsible for post-identification engagement and conversion. The personalized seller tools and motivational features engine 150 provides tools for batch listing, multi-item banking, goal setting, and performance tracking. The personalized seller tools and motivational features engine 150 maintains session state across items and allows users to view cumulative potential earnings, set financial targets, and receive motivational nudges (e.g., "You're halfway to your $500 goal"). It also provides session clean-up tools, item deduplication, and scheduling options for bulk publishing. This component is extensible to support integrations with live-streaming modules, augmented reality placement previews, and community-driven selling environments.

The item listing platform services 160 represents the backend marketplace infrastructure. It handles the final handoff for item listing creation, publishes data to user accounts, supports transaction lifecycle workflows, and integrates with authentication, analytics, and inventory management systems.

This architecture is designed to support modular scalability, high-throughput multi-item processing, and adaptive user engagement. It enables a broad range of use cases-from casual, curiosity-driven exploration to high-volume listing workflows-by combining multimodal recognition, dynamic UI adaptation, data-driven pricing intelligence, and motivational design into a unified system. Through the client-server integration pattern and internal engine modularization, the Item Discovery Engine provides a robust technical foundation for next-generation listing experiences.

For clarity and efficient reference, a glossary of key terms and concepts pertinent to the technical solution is provided below.

Item Discovery Engine: A system that identifies, describes, and values physical items based on image input, using a multimodal, fallback-driven architecture that supports real-time, asynchronous interaction.

Item Discovery Engine Interface: The user-facing interface (e.g., mobile UI or AR view) through which a user interacts with the item discovery engine-capturing images, selecting items, viewing results, and taking actions like adding or removing items.

Multimodal Fallback-Driven Architecture: An item discovery engine design that uses multiple modes of input and analysis (e.g., image, voice, metadata), and falls back through alternative processes (e.g., from product match → generative title → category inference) when initial identification fails.

Tap-to-Select Interface: An interactive UI element that lets users select individual items from an image or camera feed by tapping on them-triggering further analysis for that specific object.

Item Discovery Card: A UI element representing a single discovered item, displaying the image, title, category, price range, and available user actions (e.g., add, remove, list). Cards load asynchronously and support batch interaction.

Waterfall Logic: A sequential decision-making process used in item identification: the item discovery engine first attempts structured item matching; if unsuccessful, it falls back to generative AI for a title, infers category, assigns condition, and proceeds to pricing with its own corresponding fallback logic.

Batch Asynchronous Interaction: A UI and item discovery engine behavior that allows users to interact with multiple items in parallel, where each item's processing happens independently and results load as they become available-without blocking further user actions.

AI Recommendation by Image: An AI-powered operation that interprets an image to suggest descriptive text, item titles, or categories when item matches are not available.

AI Model: A multimodal, generative, large language or vision-language model used to produce human-readable descriptions or metadata (e.g., item titles or features) based on image input.

Price Range Identification: The process of estimating the market value of an item based on comparable listings, historical sales data, or keyword-based guidance.

Price Guidance Service: A service that returns estimated item values based on keyword-based matching and recent transactional data from platforms like eBay.

E-commerce Analytics Service: A backend service that provides supplemental market insights-such as pricing trends, sales velocity, or condition-based valuation-for identified items.

Assigned Condition: An automatically applied default item state (e.g., "used") used for pricing or listing purposes when no explicit condition is provided or detected.

Exploratory Interface: A UI mode triggered when an item cannot be confidently identified, offering prompts such as "Search manually" or "Tell us more," encouraging continued user interaction despite uncertainty.

Exploratory Prompts: Suggestions surfaced in the UI (e.g., "Looks unique!" or "Try searching manually") when the system cannot return a confident result, aimed at guiding the user toward alternative discovery paths.

Voice Assistant Integration: A hands-free interaction layer that allows users to speak commands (e.g., "Add this item" or "What's the price?") using a voice assistant powered by a real-time NLP API like OpenAI Chat.

Dynamic UI Adaptation: The system's ability to adjust the interface layout, available tools, and interaction flow based on user profile (e.g., casual vs. professional seller) or item context.

Augmented Reality (AR) for 3D Visualization: A feature that overlays identified items in the user's physical environment using 3D models or cutouts, enhancing realism and contextual understanding-useful for items like furniture or decor.

Information Overlay Mode: A visual layer in the interface that displays metadata, estimated price, or suggested actions directly over the item in the camera view or image frame.

Financial Goal Tracking: A motivational tool that allows users to set target earnings (e.g., "Earn $500 this month") and view progress based on cumulative item values and completed listings.

Batch Listing and Bulk Processing: A high-efficiency listing mode that allows users to list multiple scanned items at once, reducing repetitive actions and supporting estate sales, resellers, or large-scale decluttering efforts.

Image-Associated Item Discovery: The idea that all system actions begin from an image input-either from a camera or uploaded photo-serving as the entry point for item recognition, interaction, and valuation.

Continuous Item Discovery: Refers to the ongoing ability of the system to detect and process new items without interrupting current tasks. This includes scanning new items while prior ones are still loading or in review.

Session-Based User Flow: The concept of maintaining a persistent state (or "bank") of items throughout a session, where users can add, review, remove, or take action on multiple items without starting over.

Image-to-Card Communication Pipeline: The backend operation that maps userselected image regions to data structures (item discovery cards), encapsulating the result of the AI pipeline and enabling user interaction.

UI Control Actions (Add / Remove / Delete / Find): Defined actions users can take from item cards, such as adding the item to a collection, removing it, searching for similar items, or discarding it. These are surfaced contextually through UI controls.

Informational Display Mode: A visual enhancement layer that overlays metadata, price, or contextual suggestions directly onto the UI. It supplements user understanding without forcing deeper navigation.

Seller User Interface Interaction Model: Refers to the tailored experience for sellers, including UI components like listing workflows, bulk processing tools, and goal tracking dashboards that support sales and engagement.

Ambiguous/Unknown Item Handling Logic: The backend and UI behavior triggered when an item cannot be confidently identified. This includes fallback logic, exploratory prompts, and options for manual or voice-based continuation.

Integration of Supplemental Modules: Refers to the extensible architecture that allows real-time integration of modules like voice, AR, or analytics overlays into the item discovery flow.

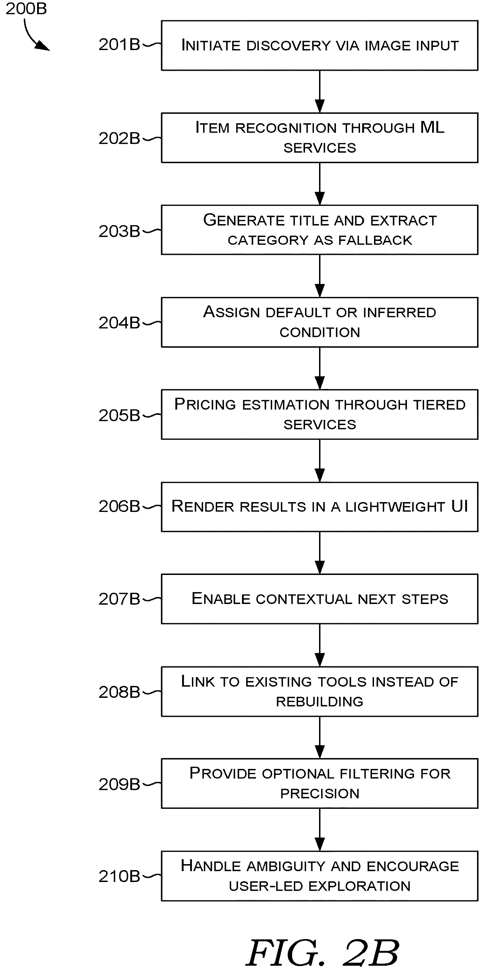

With reference to FIG. 2B, FIG. 2B, illustrates a schematic 200B associated with providing an item discovery engine in accordance with embodiments described herein. The technical solution of the item discovery engine can be explained by way of steps.

### At step 201B: Initiate Discovery via Image Input

The item discovery engine begins with user engagement through image-based input, which may originate from either a live camera interface or a manual image upload. An item discovery interface is designed to allow quick capture with minimal friction, enabling users to initiate the process by simply pointing their device at an object of interest. The item discovery interface also supports asynchronous batch interactions-users can scan multiple items in sequence without waiting for results to load.

### At step 202B: Item Recognition through ML Service

Once the image is captured, it is passed to a machine learning-based item recognition service. The machine learning-based item recognition service attempts to classify the item and retrieve structured item data or item metadata, such as an item ID or catalog match. The item discovery engine uses a confidence score to determine whether the classification is reliable. When confidence exceeds a pre-set threshold, the recognized item data is used to proceed with valuation and listing preparation. The machine learning-based item recognition service is optimal for high-coverage categories like branded electronics or trading cards.

### At step 203B: Generate Title and Extract Category Fallback

If item recognition fails or returns a confidence score below the threshold, the item discovery engine falls back to a generative AI model. The generative AI model creates a descriptive title based on the image and attempts to infer a general category. These outputs provide sufficient structure to continue the flow even when specific item matches are unavailable. This is particularly useful for unique, vintage, or unbranded items often found in secondary markets. The fallback ensures continuity and maintains user momentum.

### At step 204B: Assign a Default or Inferred Condition

With item or title and category information now available, the item discovery engine attempts to determine the condition of the item. Currently, if condition cannot be inferred from the item metadata or visual cues, the item discovery engine defaults to "used" as a conservative assumption. This assignment enables the pricing engine to function, as condition is a key variable in valuation. It is contemplated that a dedicated condition-detection service to enhance precision.

### At step 205B: Price Estimation through Tiered Services

Upon seller confirmation, the system automatically updates the item listing on integrated e-commerce or resale platforms, ensuring real-time synchronization with the market. The item discovery engine continuously monitors item performance post-listing, detecting shifts in demand or price fluctuations. If significant changes occur, the system can notify the seller with suggested pricing adjustments, maintaining competitiveness in a rapidly changing marketplace. Additionally, post-sale data and buyer behavior metrics are fed back into the machine learning model, enhancing future pricing predictions.

### At step 206B: Render Results in a Lightweight UI

Once pricing or other metadata becomes available, results are displayed in a lightweight, card-based interface. These cards load asynchronously and support horizontal swiping, allowing users to view multiple items in sequence without leaving the main view. This design prioritizes speed and fluidity, keeping users engaged while back-end services process their inputs. The system does not block new scans while processing, enabling ongoing discovery in real time.

### At step 207B: Enable Contextual Next Steps (Sell, Buy, or Research)

Each result card provides contextual actions based on the user's interest. If the price seems right, the user may proceed to list the item for sale, purchase a similar item, or add it to their watchlist. This is particularly useful in environments like record stores or thrift shops, where a user may want to check market value before buying. The IDE supports this fluid transition between research and transactional behavior.

### At step 208B: Link to Existing Item Listing Tools

Rather than replicating the full eBay listing or purchase flow, the IDE links to existing tools within the ecosystem. This modular integration model leverages existing infrastructure such as "Sell one like this" and price guidance interfaces. By doing so, the IDE remains lightweight, extensible, and compatible with broader eBay workflows. This allows users to continue deeper into eBay's stack when they're ready.

### At step 209B: Provide Optional Filtering for Precision

The UI also includes light filtering controls, such as toggling between sold and active listings or selecting condition types. These filters offer context without overwhelming the user with deep configuration. They allow more motivated users to refine their view and get clearer market signals, while casual users can still benefit from quick estimates.

### At step 210B - Handle Ambiguity and Encourage User-Led Exploration

If the system fails to confidently identify or value the item, it responds with encouragement rather than failure. It highlights the item's uniqueness and suggests that the user explore further on their own. This fosters engagement and curiosity, especially for rare or unusual items that may not match structured datasets. Rather than an error state, it becomes an opportunity for discovery.

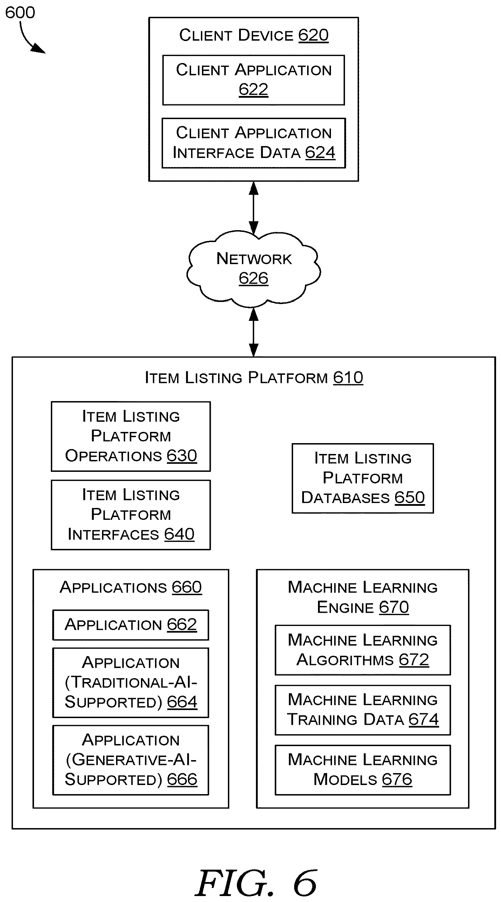

Aspects of the technical solution can be described by way of examples and with reference to FIGS. 1A - 1E, 2A, and 2B. FIG. 2A is a block diagram of an exemplary technical solution environment, based on example environments described with reference to FIGS. 6, 7, and 8 for use in implementing embodiments of the technical solution are shown. Generally, the technical solution environment includes a technical solution system suitable for providing the example item listing system 600 in which methods of the present disclosure may be employed. In particular, FIG 2A shows a high-level architecture of the cloud computing system 100 in accordance with implementations of the present disclosure. Among other engines, managers, generators, selectors, or components not shown (collectively referred to herein as "components"), the cloud computing system 100 of FIG. 2A support functionality described in FIGS. 1A - 1E.

### Example Methods

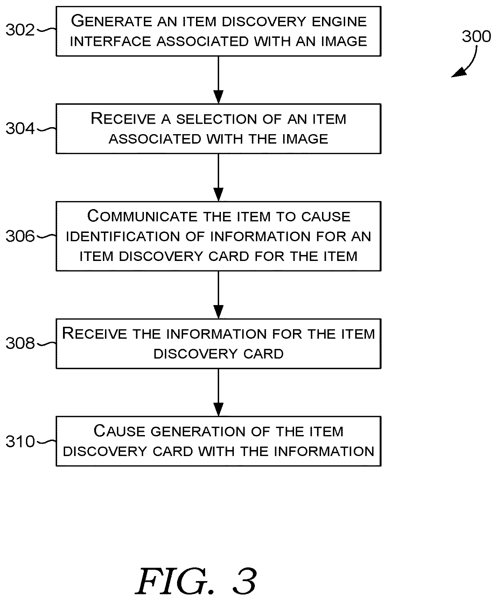

With reference to FIGS. 3, 4, and 5 flow diagrams that illustrate methods for providing an item discovery engine in an item listing system. The methods may be performed using the item listing system described herein. In embodiments, one or more computer-storage media having computer-executable or computer-useable instructions embodied thereon that, when executed, by one or more processors can cause the one or more processors to perform the methods (e.g., computer-implemented method) in an item listing system (e.g., computerized system or computer system).

Turning to FIG. 3, a flow diagram is provided that illustrates a method 300 for providing an item discovery engine in an item listing system. At block 302, generate an item discovery engine interface associated with an image, wherein the item discovery engine interface is associated with an item discovery engine, and the item discovery engine operates based on a multimodal fallback-driven architecture for real-time discovery of items. At block 304, based on the item discovery engine interface, receive a selection of an item associated with the image. At block 306, communicate the item to cause identification of information for an item discovery card for the item. At block 308, in response to communicating the item, receive the information for the item discovery card. At block 310, cause generation of the item discovery card with the information.

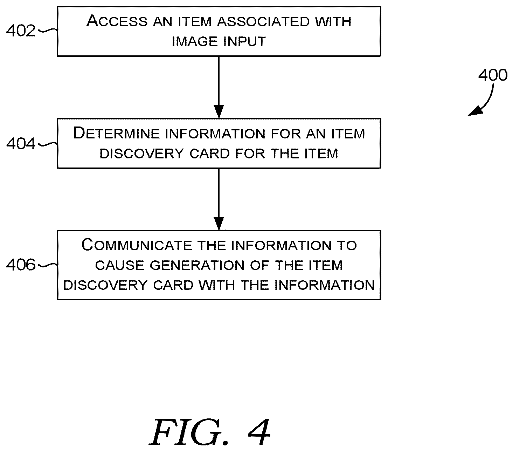

Turning to FIG. 4, a flow diagram is provided that illustrates a method 400 for providing an item discovery engine in an item listing system. At block 402, access, at an item discovery engine, an item associated with an image input, wherein the item discovery engine operates based on a multimodal fallback-driven architecture for real-time discovery of items. At block 404, determine information for an item discovery card for the item, wherein determining the information is based on a waterfall logic associated with item identification and fallback processing for continuous item discovery. At block 406, communicate the information to cause generation of the item discovery card with the information.

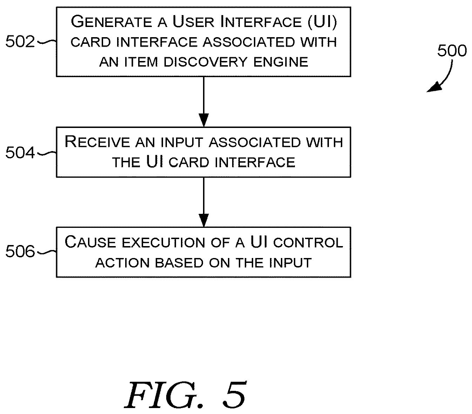

Turning to FIG. 5, a flow diagram is provided that illustrates a method 500 for providing an item discovery engine in an item listing system. At block 502, generate a user interface (UI) card interface associated with an item discovery engine. At block 504, receive an input associated with the UI. At block 506, cause execution of a UI control action based on the input.

### Technical Improvement

Embodiments of the present invention have been described with reference to several inventive features (e.g., operations, systems, engines, and components) associated with an item listing system. Inventive features described include operations, interfaces, data structures, and arrangements of computing resources associated with providing the functionality described herein relative with reference to an item discovery engine associated with an item listing system.

Embodiments of the present invention relate to the field of computing, and more particularly to an item listing system. The following described exemplary embodiments provide a system, method, and program product to, among other things, execute generative item listing operations that provide an item discovery engine. Therefore, the present embodiments improve the technical field of item listing technology enhancing the efficiency and effectiveness item listing system.

The technical solution performs a cascading item recognition operation, starting with direct product match attempts using structured databases. If confidence thresholds are not met, it automatically escalates to a generative AI model to create a descriptive title and infer category and condition from the image. This layered process enables robust identification of both cataloged and unique items without requiring user input. Moreover, the technical solution supports simultaneous or sequential interactions via camera input, voice commands, and touch gestures. It maintains consistent session state regardless of the input method, enabling users to initiate an action with one modality (e.g., voice) and complete it with another (e.g., touch or camera tap), without data loss or reinitialization. And, the technical solution provides a UI dynamically adapts to user profile, behavior, and item type. For example, casual users may be presented with simplified options and guided workflows, while power sellers receive access to batch listing, analytics, and bulk editing tools. This contextual rendering is executed in real-time and persists across item sessions.

Advantageously, the integration of generative AI fallback logic, session-aware multimodal control, and context-sensitive UI adaptation in a single listing and discovery flow is non-obvious. Their orchestration into a seamless, adaptive user experience within an e-commerce platform presents a novel system behavior not found in conventional item listing engines. The technical solution includes operations that provide measurable technical improvements: reduced latency via on-device detection, increased completion rate for item identification through fallback escalation, and improved usability through tailored interface generation. Its architecture and process flows optimize human-computer interaction and machine intelligence responsiveness. The technical solution supports capabilities that conventional listing platforms cannot, such as identifying ambiguous items without metadata, guiding sellers without prior knowledge, and handling high-throughput scanning without interrupting flow. These operations solve longstanding technical limitations in online listing and resale systems, providing a strong basis for patentability under utility criteria.

Functionality of the embodiments of the present invention have further been described, by way of an implementation and anecdotal examples - to demonstrate that the operations for providing dynamic item listing using an item discovery engine in an item listing system as a solution to a specific problem in item listing technology to improve computing operations in item listing systems. Overall, these improvements result in less CPU computation, smaller memory requirements, and increased flexibility in item listing systems when compared to previous conventional item listing systems operations performed for similar functionality.

### ADDITIONAL SUPPORT FOR DETAILED DESCRIPTION OF THE INVENTION

### Example Item Listing System Environment

Referring now to FIG. 6, FIG. 6 illustrates an example item listing system 600 computing environment in which implementations of the present disclosure may be employed. In particular, FIG. 6 shows a high-level architecture of an example item listing platform 610 that can host a technical solution environment, or a portion thereof. It should be understood that this and other arrangements described herein are set forth as examples. For example, as described above, many elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The item listing system 600 can be a cloud computing environment that provides computing resources for functionality associated with the item listing platform 610. For example, the item listing system 600 supports delivery of computing components and services - including servers, storage, databases, networking, applications, and machine learning associated with the item listing platform 610 and client device 620. A plurality of client devices (e.g., client device 620) include hardware or software that access resources on the item listing system 600. Client device 620 can include an application (e.g., client application 622) and interface data (e.g., client application interface data 624) that support client-side functionality associated with the item listing system. The plurality of client devices can access computing components of the item listing system 600 via a network (e.g., network 626) to perform computing operations.

The item listing platform 610 is responsible for providing a computing environment or architecture that includes the infrastructure that supports providing item listing platform functionality (e.g., e-commerce functionality). The item listing platform support storing item in item databases and providing a search system for receiving queries and identifying search results based on the queries. The item listing platform may also provide a computing environment with features for managing, selling, buying, and recommending different types of items. Item listing platform 610 can specifically be for a content platform such as EBAY content platform or e-commerce platform, developed by EBAY INC., of San Jose, California.

The item listing platform 610 can provide item listing operations 630 and item listing interfaces 640. The item listing operations 630 can include service operations, communication operations, resource management operations, security operations, and fault tolerance operations that support specific tasks or functions in the item listing platform 610. The item listing interfaces 640 can include service interfaces, communication interfaces, resource interfaces, security interfaces, and management and monitoring interfaces that support functionality between the item listing platform components. The item listing operations 630 and item listing interfaces 640 can enable communication, coordination and seamless functioning of the item listing system 600.

By way of example, functionality associated with item listing platform 610 can include shopping operations (e.g., product search and browsing, product selection and shopping cart, checkout and payment, and order tracking); user account operations (e.g., user registration and authentication, and user profiles); seller and product management operations (e.g., seller registration and product listing and inventory management); payment and financial operations (e.g., payment processing, refunds and returns); order fulfillment operations (e.g., order processing and fulfillment and inventory management); customer support and communication interfaces (e.g., customer support chat/email and notifications); security and privacy interfaces (e.g., authentication and authorization, payment security); recommendation and personalization interfaces (e.g., product recommendations and customer reviews and ratings); analytics and report interfaces (e.g., sales and inventory reports, and user behavior analytics); and APIs and Integration Interfaces (e.g., APIs for Third-Party Integration).

The item listing platform 610 can provide item listing platform databases (e.g., item listing platform databases 650) to manage and store different types of data efficiently. The item listing platform databases 650 can include relational databases, NoSQL databases, search databases, cache databases, content management systems, analytics databases, payment gateway database, customer relationship management databases, log and error databases, inventory and supply chain databases, and multi-channel databases that are used in combination to efficiently manage data and provide e-commerce experience for users.

The item listing platform 610 supports applications (e.g., applications 660) that is a computer program or software component or service that serves a specific function or set of functions to fulfil a particular item listing platform requirement or user requirement. Applications can be client-side (user-facing) and server-side (backend). Applications can also include application without any AI support (e.g., application 662) application supported by traditional AI model (e.g., application 664), and applications supported by generative AI models (e.g., application 666). By way of example, applications can include an online storefront application, mobile shopping app, admin and management console, payment gateway integration, user account and authentication application, search and recommendation engines, inventory and stock management application, order processing and fulfillment application, customer support and communication tools, content management system, analytics and report applications, marketing and promotion applications, multi-channel integration applications, log and error tracking applications, customer relationship management (CRM) applications, security applications, and APIs and web services that are used in combination to efficiently deliver e-commerce experiences for users.

The items listing platform 610 can include a machine learning engine (e.g., machine learning engine 670). The machine learning engine 670 refers to machine learning framework or machine learning platform that provides the infrastructure and tools to design, train, evaluate, and deploy machine learning models. The machine learning engine 670 can serve as the backbone for developing and deploying machine learning applications and solutions. Machine learning engine 670 can also provide tools for visualizing data and model results, as well as interpreting model decisions to gain insights into how the model is making predictions.

The machine learning engine 670 can provide the necessary libraries, algorithms, and utilities to perform various tasks within the machine learning workflow. The machine learning workflow can include data processing, model selection, model training, model evaluation, hyperparameter tuning, scalability, model deployment, inference, integration, customization, data visualization. Machine learning engine 670 can include pre-trained models for various tasks, simplifying the development process. In this way, the machine learning engine 670 can streamline the entire machine learning process, from data preparation and model training to deployment and inference, making it accessible and efficient for different types of users (e.g., customers, data scientists, machine learning engineers, and developers) working on a wide range of machine learning applications.

Machine learning engine 670 can be implemented in the item listing system 600 as a component that leverages machine learning algorithms and techniques (e.g., machine learning algorithms 672) to enhance various aspects of the item discovery engine's functionality. Machine learning engine 670 can provide a selection of machine learning algorithms and techniques used to teach computers to learn from data and make predictions or decisions without being explicitly programmed. These techniques are widely used in various applications across different industries, and can include the following examples: supervised learning (e.g., linear regression: classification, support vector machines (SVM); unsupervised learning (e.g., clustering, principal component analysis (PCA), association rules (e.g., apriori); reinforcement learning (e.g., Q-Learning, deep Q-Network (DQN); and deep learning (e.g., neural networks, convolutional neural networks (CNN), and recurrent neural networks (RNN); and ensemble learning random forest.

Machine learning training data 674 supports the process of building, training, and fine-tuning machine learning models. Machine learning training data 674 consists of a labeled dataset that is used to teach a machine learning model to recognize patterns, make predictions, or perform specific tasks. Training data typically comprises two main components: input feature (X) and labels or target values (Y). Input features can include variables, attributes, or characteristics used as input to the machine learning model. Input features (X) can be numeric, categorical, or even textual, depending on the nature of the problem. For example, in a model for predicting house prices, input features might include the number of bedrooms, square footage, neighborhood, and so on. Labels or target values (Y) include the values that the model aims to predict or classify. Labels represent the desired output or the ground truth for each corresponding set of input features. For instance, in a spam email classifier, the labels would indicate whether each email is spam or not (i.e., binary classification). The training process involves presenting the model with the training data, and the model learns to make predictions or decisions by identifying patterns and relationships between the input features (X) and the target values (Y). A machine learning algorithm adjusts its internal parameters during training in order to minimize the difference between its predictions and the actual labels in the training data. Machine learning engine 670 can use historical and real-time data to train models and make predictions, continually improving performance and user experience.

Machine learning engine 670 can include machine learning models (e.g., machine learning models 676) generated using the machine learning engine workflow. Machine learning models 676 can include generative AI models and traditional AI models that can both be employed in the item listing system 600. Generative AI models are designed to generate new data, often in the form of text, images, or other media, based on patterns and knowledge learned from existing data. Generative AI models can be employed in various ways including content generation, product image generation, personalized product recommendations, natural language chatbots, and content summarization. Traditional AI models encompass a wide range of algorithms and techniques and can be employed in various ways including recommendation systems, predictive analytics, search algorithms, fraud detection, customer segmentation, image classification, Natural Language Processing (NLP) and A/B testing and optimization. In many cases, a combination of both generative and traditional AI models can be employed to provide a well-rounded and effective e-commerce experience, combining data-driven insights and creativity.

Machine learning engine 670 can be used to analyze data, make predictions, and automate processes to provide a more personalized and efficient shopping experience for users. By way of example, product recommendations search and filtering: pricing optimization, inventory and stock management: customer segmentation, churn prediction and retention, fraud detection, sentiment analysis, customer support and chatbots, image and video analysis, and ad targeting and marketing. The specific applications of machine learning within the item listing platform 610 can vary depending on the specific goals, available data, and resources.

### Example Distributed Computing System Environment

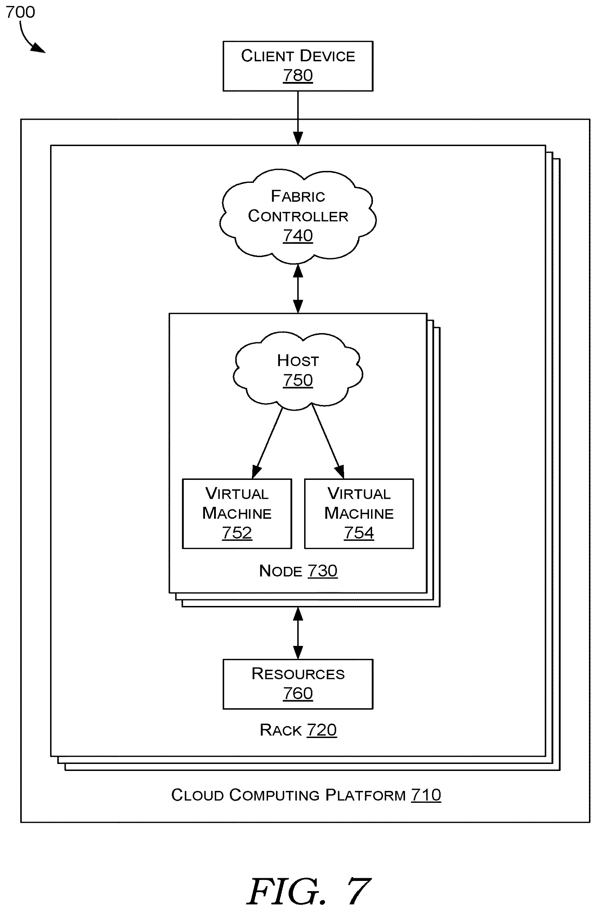

Referring now to FIG. 7, FIG. 7 illustrates an example distributed computing environment 700 in which implementations of the present disclosure may be employed. In particular, FIG. 7 shows a high-level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing platform 710 in a data center can be configured to host and support operation of endpoints of a particular service application. Cloud computing platform 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 800 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### Example Computing Environment

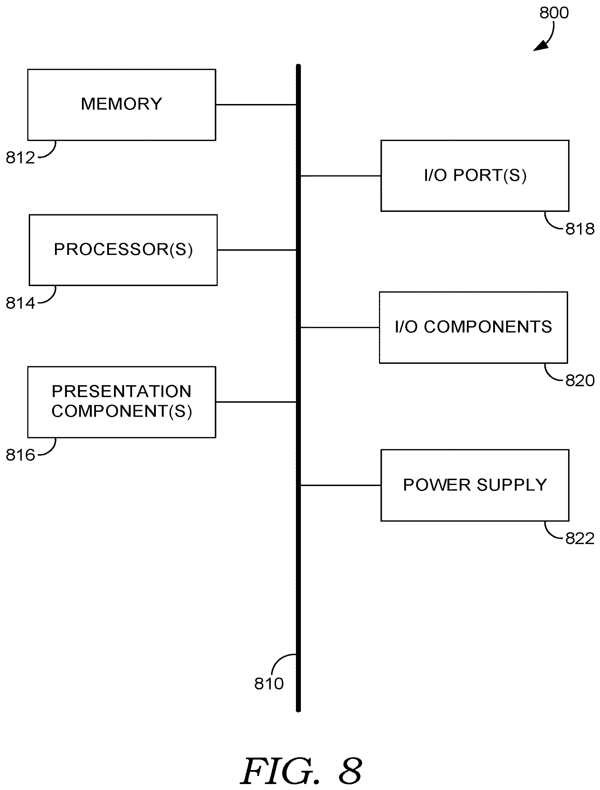

Having briefly described an overview of embodiments of the present invention, an example operating environment in which embodiments of the present invention may be implemented is described below in order to provide a general context for various aspects of the present invention. Referring initially to FIG. 8 in particular, an example operating environment for implementing embodiments of the present invention is shown and designated generally as computing device 800. Computing device 800 is but one example of a suitable computing environment and is not intended to suggest any limitation as to the scope of use or functionality of the invention. Neither should computing device 800 be interpreted as having any dependency or requirement relating to any one or combination of components illustrated.

The invention may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform tasks or implement particular abstract data types. The invention may be practiced in a variety of system configurations, including hand-held devices, consumer electronics, general-purpose computers, more specialty computing devices, etc. The invention may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art and reiterate that the diagram of FIG. 8 is merely illustrative of an example computing device that can be used in connection with one or more embodiments of the present invention. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

### Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present invention are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present invention may generally refer to the technical solution environment and the schematics described herein, it is understood that the techniques described may be extended to other implementation contexts.

Embodiments of the present invention have been described in relation to particular embodiments which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects hereinabove set forth together with other advantages which are obvious, and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
generating an item discovery engine interface associated with an image, wherein the item discovery engine interface is associated with an item discovery engine, the item discovery engine operates based on a multimodal fallback-driven architecture for real-time discovery of items;
based on the item discovery engine interface, receiving a selection of an item associated with the image;
communicating the item to cause identification of information for an item discovery card for the item;
in response to communicating the item, receiving the information for the item discovery card; and
causing generation of the item discovery card with the information.

2. The system of claim 1, wherein the item discovery engine supports:
a waterfall logic associated with item identification and fallback processing for continuous item discovery; and/or
batch asynchronous interaction associated with a non-blocking user interface for multi-item discovery without waiting for results to load.

3. The system of claim 1 or 2, wherein the item discovery engine supports item identification associated with fallback processing via an AI recommendation by image operation and a generative AI model.

4. The system of any one of the preceding claims, wherein the item discovery engine supports price range identification associated with fallback processing via a price guidance service and an e-commerce analytics service;
wherein the item discovery engine may support processing based on one or more of: a generative title when an item match is unavailable; a category inference based on an image or title; and an assigned condition.

5. The system of any one of the preceding claims, wherein the item discovery engine is associated with item identification User Interface (UI) cards associated UI controls including one or more of: adding the item; finding the item; removing the item; and deleting the item.

6. The system of any one of the preceding claims, wherein the item discovery engine supports an exploratory interface associated with an ambiguous item or unknown item, wherein the exploratory interface is associated with one or more exploratory prompts.

7. The system of any one of the preceding claims, wherein the item discovery engine supports one or more of: real-time voice assistant integration for hands-free interaction; dynamic user interface (UI) adaptation based on a user type and item context; and augmented reality (AR) for 3D visualization.

8. The system of any one of the preceding claims, wherein the item discovery engine is associated with an information overlay mode, wherein the informational overlay mode supports display information associated with one or more items associated with the image;
wherein a seller user interface interaction model may be associated with financial goal tracking and batch listing and bulk item processing high-volume workflows.

9. A computer-implemented method, the computer-implemented method comprising:
accessing, at an item discovery engine, an item associated with an image input, the item discovery engine operates based on a multimodal fallback-driven architecture for real-time discovery of items;
determining information for an item discovery card for the item, wherein determining the information is based on a waterfall logic associated with item identification and fallback processing for continuous item discovery; and
communicating the information to cause generation of the item discovery card with the information.

10. The computer-implemented method of claim 9, wherein the item discovery engine supports batch asynchronous interaction associated with a non-blocking user interface for multi-item discovery without waiting for results to load.

11. The computer-implemented method of claim 9 or 10, wherein the item discovery engine supports:
item identification associated with fallback processing via an AI recommendation by image operation and a generative AI model; and/or
price range identification associated with fallback processing via a price guidance service and an e-commerce analytics service.

12. The computer-implemented method of any one of claims 9 to 11, wherein the item discovery engine supports an exploratory interface associated with an ambiguous item or unknown item, wherein the exploratory interface is associated with one or more exploratory prompts.

13. One or more computer-storage media having computer-executable instructions embodied thereon that, when executed by a computing system having a processor and memory, cause the processor to perform operations, the operations comprising:
generating an item discovery engine interface associated with an image, wherein the item discovery engine interface is associated with an item discovery engine, the item discovery engine operates based on a multimodal fallback-driven architecture for real-time discovery of items;
based on the item discovery engine interface, receiving a selection of an item associated with the image;
communicating the item to cause identification of information for an item discovery card for the item;
in response to communicating the item, receiving the information for the item discovery card; and
causing generation of the item discovery card with the information.

14. The media of claim 13, wherein the item discovery interface is a tap-to-select interface that supports batch asynchronous interaction associated with a non-blocking user interface for multi-item discovery without waiting for results to load.

15. The media of claim 13 or 14, wherein the item discovery engine supports one or more of: real-time voice assistant integration for hands-free interaction; dynamic user interface (UI) adaptation based on a user type and item context; and augmented reality (AR) for 3D visualization;
wherein the item discovery engine may be associated with an information overlay mode, wherein the informational overlay mode may support display information associated with one or more items associated with the image.
